# FASCICULE DE BREVET EUROPEEN

(11) **EP 3 743 396 B1**
(45) Date de publication et mention de la délivrance du brevet: **16.08.2023**
(21) Numéro de dépôt: 19710002.7
(22) Date de dépôt: 23.01.2019
(51) Int. Cl.: C03C 27/10, C03C 3/083, C03C 3/085, B32B 17/00

(54) **VITRAGE FEUILLETE**
VERBUNDGLASSCHEIBE
LAMINATED GLAZING

(30) Priorité: 26.01.2018 FR 1850634
(43) Date de publication de la demande: 02.12.2020
(73) Titulaire: SAINT-GOBAIN GLASS FRANCE, 92400 Courbevoie (FR)
(72) Inventeur: CINTORA GONZALEZ, Octavio, 95150 TAVERNY (FR); SAUVINET, Vincent, 38000 GRENOBLE (FR); VERRAT DEBAILLEUL, Adèle, 60150 VILLERS SUR COUDUN (FR)
(74) Mandataire: Saint-Gobain Recherche
(86) Numéro de dépôt international: PCT/FR2019/050145
(87) Numéro de publication internationale: WO 2019/145638

(56) Documents cités:
- WO-A1-2015/092385
- WO-A1-2017/103528
- US-A- 5 905 047
- US-A- 6 010 775
- US-B1- 9 573 841
- S.K Sundaram: "Impact of Redox in Industrial Glass Melting and Importance of Redox Control" In: "77th Conference on Glass Problems", 15 mai 2017 (2017-05-15), John Wiley & Sons, Inc, Hoboken, NJ, USA, XP055515710, ISBN: 978-1-119-41779-8 pages 113-128, DOI: 10.1002/9781119417507.ch11, le document en entier

## Description

L'invention se rapporte au domaine des vitrages feuilletés, plus particulièrement des vitrages feuilletés pour automobile, notamment employés comme pare-brise ou vitrages latéraux.

Les vitrages feuilletés sont des vitrages dans lesquels deux feuilles de verre sont liées adhésivement entre elles par un intercalaire de feuilletage qui possède la capacité de retenir les éclats de verre en cas de bris. L'intercalaire de feuilletage peut également remplir d'autres fonctions, par exemple de résistance à l'effraction, acoustiques, thermiques etc... L'intercalaire de feuilletage comprend en général au moins une feuille polymérique, typiquement en polyvinylbutyral, apte à se ramollir lors du traitement de feuilletage et à adhérer aux feuilles de verre.

Les vitrages feuilletés sont utilisés dans les véhicules automobiles comme pare-brise, et parfois comme vitrages latéraux. A ce titre, ils doivent répondre à un nombre croissant d'exigences, dont des exigences mécaniques (ils doivent résister au gravillonnage), des exigences physiques (ils doivent être le plus léger possible de manière à pénaliser le moins possible la consommation énergétique du véhicule), des exigences optiques (leur transmission dans le visible doit être suffisante pour permettre une bonne visibilité pour le conducteur) et des exigences thermiques (leur transmission du rayonnement solaire doit être faible de manière, en été, à réduire les apports de chaleur solaire et donc le besoin de climatisation), sans parler des exigences de coût. D'autres exigences sont quant à elles relatives au procédé de fabrication de ces vitrages. En particulier, les deux feuilles de verre du vitrage feuilleté doivent pouvoir être bombées ensemble de manière à assurer un parfait assemblage et éviter toutes distorsions optiques. Certaines de ces exigences sont contradictoires, car un vitrage plus léger est un vitrage plus mince, mais qui aura tendance à moins bien résister au gravillonnage et à plus transmettre le rayonnement infrarouge.

WO 2015/092385 A1, WO 2017/103528 A1 et US 6 010 775 A divulguent des vitrages feuilletés composés de deux feuilles de verre et d'une couche intercalaire.

L'invention a pour but de proposer un vitrage feuilleté répondant à l'ensemble de ces exigences et qui soit peu coûteux à fabriquer.

A ce titre, l'invention a pour objet un vitrage feuilleté comprenant une première feuille d'un verre coloré et une deuxième feuille d'un verre clair assemblées entre elles au moyen d'un intercalaire de feuilletage, ladite première feuille ayant une épaisseur e1 allant de 1,5 à 2,5 mm, ladite deuxième feuille ayant une épaisseur e2 allant de 0,4 à 1,9 mm, le rapport R = e2/e1² étant d'au plus 0,40 mm⁻¹, ledit vitrage possédant une transmission lumineuse d'au moins 70% et une transmission solaire directe d'au plus 55%, ledit verre coloré possédant une composition chimique comprenant une teneur pondérale en fer total, exprimée sous la forme Fe₂O₃, allant de 1,1 à 2,0%, avec un rapport redox, défini comme le rapport entre la teneur pondérale en fer ferreux, exprimée sous la forme FeO, et la teneur pondérale en fer total, exprimée sous la forme Fe₂O₃, allant de 0,23 à 0,32.

Un autre objet de l'invention est un vitrage pour véhicule de transport, notamment automobile, en particulier un pare-brise ou un vitrage latéral, comprenant un vitrage feuilleté selon l'invention.

Dans ce vitrage, la deuxième feuille de verre est de préférence la feuille intérieure, destinée à être positionnée à l'intérieur de l'habitacle du véhicule.

La transmission lumineuse est calculée à partir d'un spectre expérimental réalisé sur la feuille de verre ou le vitrage considéré, en prenant en compte l'illuminant A défini par la norme ISO 11664-2 et l'observateur de référence CIE 1931 (2°) défini par la norme ISO 11664-1. La transmission solaire directe est déterminée selon la norme ISO 9050 :2003.

Par « verre clair », on entend un verre dont la transmission lumineuse est d'au moins 90% pour une épaisseur de 2 mm. Les verres clairs contiennent en général une teneur pondérale en fer total d'au plus 0,15%, notamment 0,1% et même 0,08%. La teneur pondérale en fer total des verres clairs est toutefois généralement d'au moins 0,01% car les matières premières naturelles employées dans la fusion du verre contiennent des impuretés de fer, et des teneurs plus faibles nécessiteraient l'utilisation de matières premières particulièrement coûteuses. Le verre clair ne contient en général pas d'autres agents colorants que le fer ; en particulier il ne contient de préférence pas d'oxyde de cobalt, d'oxyde de chrome, de sélénium, d'oxyde de cuivre, d'oxyde de nickel et d'oxydes de terres rares, sauf impuretés inévitables.

Le choix des épaisseurs e1 et e2 et du rapport R s'est révélé particulièrement crucial pour obtenir la résistance au gravillonnage désirée ainsi que de bonnes propriétés optiques et énergétiques.

L'épaisseur e2 est de préférence d'au plus 1,8 mm, notamment 1,7 mm, voire 1,6 mm et même 1,5 mm. L'épaisseur e2 est de préférence d'au moins 0,5 mm, notamment 0,6 mm, voire 0,7 mm et même 0,8 mm ou 0,9 mm. Elle est de préférence comprise dans un domaine allant de 0,5 à 1,7 mm.

L'épaisseur e1 est de préférence d'au plus 2,4 mm, notamment 2,3 mm, voire 2,2 mm ou 2,1 mm. Elle est de préférence d'au moins 1,6 ou 1,7 mm.

Le rapport R est avantageusement d'au plus 0,35 ou 0,30, notamment 0,25, voire 0,20. Il est de préférence d'au moins 0,10.

Des couples d'épaisseurs e1/e2 particulièrement avantageux sont notamment :
e1=1,6 mm et e2=0,5 mm
e1=1,6 mm et e2=0,7 mm
e1=1,8 mm et e2=0,5 mm
e1=1,8 mm et e2=0,7 mm
e1=1,8 mm et e2=1,1 mm
e1=2,1 mm et e2=0,5 mm
e1=2,1 mm et e2=0,7 mm
e1=2,1 mm et e2=1,1 mm
e1=2,1 mm et e2=1,6 mm

Le vitrage est de préférence constitué de la première feuille, de la deuxième feuille et de l'intercalaire de feuilletage, ce qui n'exclut toutefois pas qu'un de ces constituants soit revêtu de couches ou d'empilements de couches, comme décrit ci-après.

Le vitrage est de préférence bombé. Pour ce faire, les deux feuilles de verre sont bombées, généralement ensemble, avant d'être assemblées au moyen de l'intercalaire de feuilletage. Le bombage peut être réalisé de manière connue, par exemple par gravité (le verre se déformant sous son propre poids) ou par pressage, à des températures allant typiquement de 550 à 650°C.

Lorsque le vitrage est bombé, la deuxième feuille de verre est avantageusement la feuille intérieure du vitrage, c'est-à-dire celle qui est située du côté concave du vitrage ; cette feuille est destinée à être positionnée à l'intérieur de l'habitacle du véhicule. La première feuille de verre est alors la feuille extérieure, située du côté convexe du vitrage ; cette feuille est destinée à être positionnée à l'extérieur de l'habitacle du véhicule.

Le feuilletage peut également être réalisé de manière connue par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

Afin d'améliorer la résistance au gravillonnage, la première feuille de verre est de préférence en verre non-renforcé mécaniquement. Elle n'est donc dans ce cas ni trempée ni durcie. Par « non-renforcé mécaniquement », on entend que la feuille de verre n'a pas subi de renforcement par trempe chimique ou à l'aide de moyens de refroidissement forcé dans le but de créer de fortes contraintes de compression à la surface de la feuille de verre. Cette définition n'exclut toutefois pas la possibilité d'utiliser des moyens de refroidissement classiquement utilisés et nécessaires au respect des temps de cycle ou à l'obtention de contraintes de forme. Lors d'un procédé de formage de vitrage pour automobile, il est en effet nécessaire de refroidir le verre après son formage afin de respecter les temps de cycle et de créer des contraintes de forme en mettant la périphérie du vitrage en compression pour augmenter la résistance des bords à la casse. Le terme « non-renforcé mécaniquement » n'exclut donc pas la présence de contraintes de bord.

Le verre non-renforcé mécaniquement est de préférence tel que la contrainte résiduelle de tension à cœur est d'au plus 12 MPa, notamment 5 MPa, voire 2 MPa. De telles valeurs de contrainte sont notamment obtenues avec des vitesses de refroidissement d'au plus 1°C par seconde après bombage, plus précisément entre la sortie du four de bombage et la zone dans laquelle la température du verre correspond à sa température d'*annealing.* La mesure de la contrainte résiduelle est notamment réalisée sur une éprouvette obtenue en découpant dans le vitrage une éprouvette parallélépipédique de 10 mm sur 50 mm, en séparant la première feuille de verre de l'intercalaire de feuilletage, par exemple en traitant thermiquement l'éprouvette à une température de 150 à 200°C, puis en mesurant les contraintes dans l'épaisseur de la feuille de verre. La mesure des contraintes peut par exemple être réalisée au moyen d'un biasographe, décrit au chapitre 8 de l'ouvrage « Photoelasticity of Glass » de H. Aben, C. Guillemet (1993) Springer Verlag.

La deuxième feuille de verre peut être nonrenforcée mécaniquement ou au contraire être en verre trempé.

Toujours afin d'améliorer la résistance au gravillonnage, la deuxième feuille de verre est avantageusement trempée chimiquement, car les faibles épaisseurs utilisées rendent difficiles la trempe thermique. La trempe chimique (aussi appelée « échange ionique ») consiste à mettre en contact la surface du verre avec un bain de sels fondus (par exemple du nitrate de potassium), de manière à renforcer la surface du verre en échangeant des ions du verre (par exemple des ions sodium) par des ions de plus grand rayon ionique (par exemple des ions potassium). Cet échange ionique permet en effet de former des contraintes de compression à la surface du verre et sur une certaine épaisseur. De préférence, la contrainte de surface est d'au moins 300 MPa, notamment 400 et même 500 MPa, et d'au plus 700 MPa, et l'épaisseur de la zone en compression est d'au moins 20 µm, typiquement entre 20 et 50 µm. Le profil de contraintes peut être déterminé de manière connue à l'aide d'un microscope polarisant équipé d'un compensateur de Babinet.

La première feuille est de préférence constituée d'un verre silico-sodocalcique.

On entend par verre silico-sodocalcique un verre contenant de la silice comme oxyde formateur et des oxydes de sodium et de calcium comme oxydes modificateurs. Un verre silico-sodocalcique possède de préférence une composition chimique qui comprend de 60 à 78% de silice (SiO₂), de 10 à 16% de soude (Na₂O) et de 5 à 15% de chaux (CaO). Comme indiqué précédemment, ce verre silico-sodocalcique est de préférence non-renforcé mécaniquement.

Selon un mode de réalisation, la deuxième feuille est également constituée d'un verre silico-sodocalcique. Dans ce cas, l'épaisseur e2 est de préférence d'au moins 0,6 mm. La deuxième feuille est de préférence en verre non-renforcé mécaniquement.

D'autres types de verre sont toutefois utilisables, en particulier des verres de borosilicates, d'aluminosilicates ou d'aluminoborosilicates.

Selon un autre mode de réalisation, la deuxième feuille de verre est en particulier constituée d'un verre d'aluminosilicate, notamment de sodium. Le verre est alors, de préférence, trempé chimiquement. L'épaisseur e2 est dans ce cas avantageusement d'au plus 0,7 mm, voire 0,6 mm, notamment comprise dans un domaine allant de 0,4 à 0,55 mm.

Le verre d'aluminosilicate de sodium comprend de préférence de 55 à 73% en poids de SiO₂, de 2 à 20% en poids d'Al₂O₃ et de 9 à 17% en poids de Na₂O. Il comprend en outre avantageusement de 2 à 11% en poids de MgO, de 0 à 10% en poids de K₂O, moins de 3% en poids de CaO et moins de 10%, notamment moins de 5% en poids de B₂O₃.

Plus particulièrement, le verre d'aluminosilicate de sodium possède de préférence une des compositions suivantes, exprimées en pourcentages massiques d'oxydes.

SiO₂ : 55-71%, notamment 59-68% ; Al₂O₃ : 3-11%, notamment 4-10% ; MgO : 4-11%, notamment 5-10% ; Na₂O : 9-17%, notamment 10-14% ; K₂O : 3-12%, notamment 5-11%; B₂O₃: <2%, notamment <0,5%; CaO: < 1%, notamment < 0,5%.

SiO₂ : 55-70%, notamment 58-68% ; Al₂O₃ : 8-20%, notamment 9-18% ; MgO : 2-8%, notamment 2-7% ; Na₂O : 10-17%, notamment 11-16% ; K₂O : 1 à 8 % , notamment 1 à 6 % ; B₂O₃ : < 3%, notamment < 2% ; CaO : < 1%, notamment < 0,6%.

SiO₂ : 60-73%, notamment 63-71% ; Al₂O₃ : 2-8%, notamment 3-6% ; MgO : 6-11%, notamment 7-10% ; Na₂O : 10-17%, notamment 11-16% ; K₂O : < 2%, notamment < 1% ; CaO : 0-3%, notamment 1-2% ; B₂O₃ : < 2%, notamment < 1%.

La teneur pondérale en fer total du verre coloré, exprimée sous la forme Fe₂O₃, est de préférence d'au moins 1,2%, notamment 1,3%. Elle est de préférence d'au plus 1,9%, notamment 1,8%. Elle est de préférence comprise dans un domaine allant de 1,3 à 1,8%, notamment de 1,3 à 1,5% ou de 1,5 à 1,7%.

Le rapport redox du verre coloré est de préférence d'au moins 0,24, notamment 0,25. Il est de préférence d'au plus 0,31, notamment 0,30, voire 0,29 ou 0,28. Le rapport redox est de préférence compris dans un domaine allant de 0,24 à 0,29, notamment de 0,25 à 0,28, voire de 0,25 à 0,27.

Les teneurs en fer total préférées et les rapports redox préférés présentés ci-avant peuvent être combinés, selon toutes les combinaisons possibles. Des combinaisons préférées sont notamment une teneur en fer allant de 1,3 à 1,8% combinée avec un rapport redox allant de 0,24 à 0,29, ou de 0,25 à 0,28 ou de 0,25 à 0,27, ou encore une teneur en fer allant de 1,3 à 1,5% combinée avec les mêmes gammes de rapports redox préférées, ou encore un teneur en fer allant de 1,5 à 1,7%, également combinée avec les mêmes gammes de rapports redox préférés.

Le verre coloré ne contient de préférence pas d'autres agents colorants que l'oxyde de fer ou l'oxyde de titane. Ce dernier est une impureté fréquemment contenue dans certaines matières premières et peut contribuer à teinter légèrement le verre. La teneur en oxyde de titane est généralement d'au plus 0,1%, voire 0,06%. Le verre coloré ne contient de préférence pas d'oxyde de cobalt, d'oxyde de nickel, d'oxyde de chrome, de sélénium, d'oxyde de cuivre, d'oxyde de vanadium, d'oxyde de manganèse. Il ne contient de préférence pas d'oxyde de terres rares, en particulier pas d'oxyde de cérium. Selon une variante, le verre coloré peut contenir de très faibles quantités d'au moins un agent colorant précité afin d'ajuster les propriétés optiques. Dans ce cas, la teneur totale en agents colorants autre que les oxydes de fer et de titane est de préférence d'au plus 40 ppm (1 ppm = 0,0001%), notamment 30 ou 20 ppm.

La transmission solaire directe du vitrage est de préférence d'au plus 52%, notamment 50%, et même 48% ou 46%, voire 45%. Elle est en générale d'au moins 35%.

La transmission lumineuse du vitrage est de préférence d'au plus 80%, notamment d'au plus 78% ou 77%.

L'épaisseur du vitrage est de préférence d'au plus 5 mm, notamment 4,5 mm, voire 4 mm. Elle est en général d'au moins 2,8 mm, notamment 3 mm.

Au moins une feuille de verre est avantageusement revêtue d'une couche d'émail sur une partie de sa surface, en particulier à sa périphérie, de manière à protéger contre le rayonnement ultraviolet les joints servant à fixer le vitrage à la baie de carrosserie.

Au moins une feuille de verre peut être revêtue sur une face tournée vers l'intercalaire de feuilletage d'un empilement de couches minces électroconducteur et/ou à faible émissivité, afin d'obtenir un vitrage chauffant ou d'améliorer encore l'isolation thermique du vitrage. Un tel empilement comprend de préférence au moins une couche mince d'argent encadrée par au moins deux couches minces diélectriques.

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (*head-up display*)*.*

Les exemples qui suivent illustrent l'invention de manière non-limitative.

Des vitrages feuilletés ont été obtenus en feuilletant de manière connue deux feuilles de verre au moyen d'un intercalaire de PVB de 0,76 mm d'épaisseur.

Les feuilles de verre utilisées sont décrites ci-après.

### Verre A1 :

Verre silico-sodo-calcique contenant 1,60% de fer total (exprimé en Fe₂O₃) avec un rapport redox de 0,26.

### Verre A2 :

Verre silico-sodo-calcique contenant 1,36% de fer total (exprimé en Fe₂O₃) avec un rapport redox de 0,26.

### Verre B1

Verre silico-sodocalcique clair commercialisé par la Demanderesse sous la dénomination Planiclear et contenant 0,05% de fer total (exprimé en Fe₂O₃), avec un rapport redox de 0,25.

### Verre B2

Verre silico-sodocalcique clair commercialisé par la Demanderesse sous la dénomination Planilux et contenant 0,1% de fer total (exprimé en Fe₂O₃), avec un rapport redox de 0,25.

### Verre C

Verre silico-sodocalcique teinté contenant 0,8% de fer total (exprimé en Fe₂O₃), avec un rapport redox de 0,26.

### Verre D

Verre silico-sodocalcique teinté contenant 1,0% de fer total (exprimé en Fe₂O₃), avec un rapport redox de 0,26.

### Verre E :

Verre d'aluminosilicate de sodium trempé chimiquement de manière à ce que la contrainte de surface soit supérieure à 400 MPa et l'épaisseur en compression supérieure à 20 µm.

Les autres verres A à D sont des verres nonrenforcés mécaniquement.

La transmission lumineuse (notée TL) et la transmission solaire directe (notée TE) ont été calculées à partir de spectres expérimentaux obtenus par spectrophotométrie.

La résistance au gravillonnage des vitrages est évaluée en mesurant lors d'un test d'impact la hauteur à partir de laquelle la chute d'un indenteur lâché au-dessus du verre provoque la casse du vitrage. Une note est ensuite attribuée en fonction de la hauteur mesurée.
- : hauteur inférieure à 1000 mm
+ : hauteur entre 1000 et 1200 mm
++ : hauteur supérieure à 1200 mm

Les tableaux 1 à 4 ci-après récapitulent les résultats obtenus en indiquant le type de verre choisi pour la première et la deuxième feuille, les épaisseurs e1 et e2, la valeur du rapport R, l'épaisseur totale du vitrage, la transmission lumineuse, la transmission solaire directe et enfin la note obtenue au test de résistance au gravillonnage.

**Tableau 1**

| | C1 | C2 | 1 | 2 | 3 |
|---|---|---|---|---|---|
| Verre 1 | C | D | A1 | A1 | A1 |
| e1 (mm) | 1,8 | 1,6 | 1,6 | 2,1 | 1,8 |
| Verre 2 | C | B1 | B1 | B1 | B1 |
| e2 (mm) | 1,4 | 0, 7 | 0, 7 | 1, 1 | 1, 1 |
| R (mm⁻¹) | 0,43 | 0,27 | 0,27 | 0,25 | 0,34 |
| Epaisseur totale (mm) | 4 | 3, 1 | 3,1 | 4 | 3,7 |
| TL (%) | 74,5 | 80,3 | 76, 3 | 72,1 | 74,5 |
| TE (%) | 47,0 | 56, 2 | 49,6 | 43,2 | 46,8 |
| gravillonnage | - | ++ | ++ | ++ | + |

**Tableau 2**

| | 4 | 5 | 6 | 7 | 8 |
|---|---|---|---|---|---|
| Verre 1 | A1 | A1 | A2 | A2 | A2 |
| e1 (mm) | 2,1 | 2,1 | 2,1 | 2,1 | 1,6 |
| Verre 2 | B1 | B1 | B2 | B2 | B2 |
| e2 (mm) | 1,6 | 0, 7 | 1, 1 | 1,6 | 0,7 |
| R (mm⁻¹) | 0,36 | 0,16 | 0,25 | 0,36 | 0,27 |
| Epaisseur totale (mm) | 4,5 | 3,6 | 4 | 4,5 | 3, 1 |
| TL (%) | 72, 0 | 72,2 | 72,7 | 72,5 | 76, 8 |
| TE (%) | 43,0 | 43,3 | 44,4 | 44,0 | 50,7 |
| gravillonnage | + | ++ | ++ | + | ++ |

**Tableau 3**

| | 9 | 10 | 11 | 12 | 13 |
|---|---|---|---|---|---|
| Verre 1 | A2 | A2 | A2 | A2 | A2 |
| e1 (mm) | 2,1 | 2, 1 | 1,6 | 2,1 | 2, 1 |
| Verre 2 | B1 | B1 | B1 | E | E |
| e2 (mm) | 1, 1 | 1,6 | 0,7 | 0, 7 | 0,5 |
| R (mm⁻¹) | 0,25 | 0, 36 | 0,27 | 0, 16 | 0,11 |
| Epaisseur totale (mm) | 4 | 4,5 | 3, 1 | 3,6 | 3, 4 |
| TL (%) | 73,0 | 72, 8 | 76,9 | 72,5 | 72,5 |
| TE (%) | 44,7 | 44,5 | 51, 0 | 43, 6 | 43,6 |
| gravillonnage | ++ | + | ++ | ++ | ++ |

**Tableau 4**

| | 14 | 15 |
|---|---|---|
| Verre 1 | A2 | A2 |
| e1 (mm) | 1,6 | 1,8 |
| Verre 2 | E | E |
| e2 (mm) | 0,5 | 0,5 |
| R (mm⁻¹) | 0,20 | 0, 15 |
| Epaisseur totale (mm) | 2,9 | 3, 1 |
| TL (%) | 77,0 | 76, 5 |
| TE (%) | 50,9 | 49, 7 |
| gravillonnage | ++ | ++ |

Le vitrage comparatif C1 présente une transmission solaire directe ainsi qu'une transmission lumineuse adéquates. Sa résistance au gravillonnage n'est toutefois pas très élevée. Le vitrage comparatif C2 est meilleur en termes de résistance au gravillonnage, mais au détriment de ses propriétés thermiques. En revanche, les vitrages selon l'invention 1 à 15 présentent un bon compromis entre les exigences mécanique et thermiques, pour un faible poids.

## Revendications

1. Vitrage feuilleté comprenant une première feuille d'un verre coloré et une deuxième feuille d'un verre clair assemblées entre elles au moyen d'un intercalaire de feuilletage, ladite première feuille ayant une épaisseur e1 allant de 1,5 à 2,5 mm, ladite deuxième feuille ayant une épaisseur e2 allant de 0,4 à 1,9 mm, le rapport R = e2/e1² étant d'au plus 0,40 mm⁻¹, ledit vitrage possédant une transmission lumineuse d'au moins 70% et une transmission solaire directe d'au plus 55%, ledit verre coloré possédant une composition chimique comprenant une teneur pondérale en fer total, exprimée sous la forme Fe₂O₃, allant de 1,1 à 2,0%, avec un rapport redox, défini comme le rapport entre la teneur pondérale en fer ferreux, exprimée sous la forme FeO, et la teneur pondérale en fer total, exprimée sous la forme Fe₂O₃, allant de 0,23 à 0,32.

2. Vitrage feuilleté selon la revendication 1, tel que l'épaisseur e2 est comprise dans un domaine allant de 0,5 à 1,7 mm.

3. Vitrage feuilleté selon l'une des revendications précédentes, tel que le rapport R est d'au plus 0,35, notamment 0,30 mm⁻¹.

4. Vitrage feuilleté selon l'une des revendications précédentes, dans lequel la première feuille est constituée d'un verre silico-sodocalcique.

5. Vitrage feuilleté selon l'une des revendications précédentes, dans lequel la première feuille de verre est en verre non-renforcé mécaniquement.

6. Vitrage feuilleté selon l'une des revendications précédentes, dans lequel la deuxième feuille de verre est trempée chimiquement.

7. Vitrage feuilleté selon l'une des revendications précédentes, dans lequel la deuxième feuille est constituée d'un verre silico-sodocalcique, l'épaisseur e2 étant d'au moins 0,6 mm.

8. Vitrage selon l'une des revendications 1 à 6, dans lequel la deuxième feuille de verre est constituée d'un verre d'aluminosilicate trempé chimiquement, l'épaisseur e2 étant d'au plus 0,7 mm.

9. Vitrage feuilleté selon l'une des revendications précédentes, dans lequel le verre coloré possède une composition chimique comprenant une teneur pondérale en fer total, exprimée sous la forme Fe₂O₃, allant de 1,3 à 1,8%.

10. Vitrage feuilleté selon l'une des revendications précédentes, dans lequel le verre coloré possède une composition chimique telle que le rapport redox est compris dans un domaine allant de 0,24 à 0,29.

11. Vitrage feuilleté selon l'une des revendications précédentes, dont la transmission solaire directe est d'au plus 50%.

12. Vitrage feuilleté selon l'une des revendications précédentes, dont l'épaisseur est d'au plus 5 mm, notamment 4,5 mm, voire 4 mm.

13. Vitrage feuilleté selon l'une des revendications précédentes, dans lequel l'intercalaire de feuilletage comprend au moins une feuille de polyvinylacétal, notamment de polyvinylbutyral.

14. Vitrage pour véhicule de transport, notamment automobile, en particulier pare-brise ou vitrage latéral, comprenant un vitrage feuilleté selon l'une des revendications précédentes.

15. Vitrage selon la revendication précédente, dans lequel la deuxième feuille de verre est la feuille intérieure, destinée à positionnée à l'intérieur de l'habitacle du véhicule.

## Patentansprüche

1. Verbundverglasung, umfassend eine erste Scheibe aus einem farbigen Glas und eine zweite Scheibe aus einem klaren Glas, die untereinander mittels einer Verbundzwischenlage zusammengefügt sind, wobei die erste Scheibe eine Dicke e1 von 1,5 bis 2,5 mm aufweist, die zweite Scheibe eine Dicke e2 von 0,4 bis 1,9 mm aufweist, das Verhältnis R = e2/e1² höchstens 0,40 mm⁻¹ beträgt, die Verglasung eine Lichtdurchlässigkeit von mindestens 70 % und eine direkte Sonnendurchlässigkeit von höchstens 55 % besitzt, das farbige Glas eine chemische Zusammensetzung besitzt, umfassend einen Gesamteisengewichtsanteil, ausgedrückt in der Form Fe₂O₃, von 1,1 bis 2,0 % mit einem Redoxverhältnis, das als das Verhältnis zwischen dem Eiseneisengewichtsanteil, ausgedrückt in der Form FeO, und dem Gesamteisengewichtsanteil, ausgedrückt in der Form Fe₂O₃, definiert ist, von 0,23 bis 0,32.

2. Verbundverglasung nach Anspruch 1, sodass die Dicke e2 in einem Gebiet von 0,5 bis 1,7 mm enthalten ist.

3. Verbundverglasung nach einem der vorstehenden Ansprüche, wobei das Verhältnis R höchstens 0,35, insbesondere 0,30 mm⁻¹ beträgt.

4. Verbundverglasung nach einem der vorstehenden Ansprüche, wobei die erste Scheibe aus einem Kalknatronsilicatglas besteht.

5. Verbundverglasung nach einem der vorstehenden Ansprüche, wobei die erste Glasscheibe aus einem nicht mechanisch verstärkten Glas besteht.

6. Verbundverglasung nach einem der vorstehenden Ansprüche, wobei die zweite Glasscheibe chemisch vorgespannt ist.

7. Verbundverglasung nach einem der vorstehenden Ansprüche, wobei die zweite Glasscheibe aus einem Kalknatronsilicatglas besteht, wobei die Dicke e2 mindestens 0,6 mm beträgt.

8. Verglasung nach einem der Ansprüche 1 bis 6, wobei die zweite Glasscheibe aus einem chemisch vorgespannten Aluminosilicatglas besteht, wobei die Dicke e2 höchstens 0,7 mm beträgt.

9. Verbundverglasung nach einem der vorstehenden Ansprüche, wobei das farbige Glas eine chemische Zusammensetzung besitzt, umfassend einen Gesamteisengewichtsanteil, ausgedrückt in der Form Fe₂O₃, von 1,3 bis 1,8 %.

10. Verbundverglasung nach einem der vorstehenden Ansprüche, wobei das farbige Glas eine chemische Zusammensetzung besitzt, sodass das Redoxverhältnis in einem Gebiet von 0,24 bis 0,29 enthalten ist.

11. Verbundverglasung nach einem der vorstehenden Ansprüche, deren direkte Sonnendurchlässigkeit höchstens 50 % beträgt.

12. Verbundverglasung nach einem der vorstehenden Ansprüche, deren Dicke höchstens 5 mm, insbesondere 4,5 mm, sogar 4 mm beträgt.

13. Verbundverglasung nach einem der vorstehenden Ansprüche, wobei die Verbundzwischenlage mindestens eine Scheibe aus Polyvinylacetal, insbesondere aus Polyvinylbuytral umfasst.

14. Verglasung für ein Transportfahrzeug, insbesondere einen Kraftwagen, besonders eine Windschutzscheibe oder eine seitliche Verglasung, umfassend eine Verbundverglasung nach einem der vorstehenden Ansprüche.

15. Verglasung nach dem vorstehenden Anspruch, wobei die zweite Glasscheibe die Innenscheibe ist, die dafür bestimmt ist, auf der Innenseite des Fahrzeuginnenraums des Fahrzeugs positioniert zu werden.

## Claims

1. A laminated glazing comprising a first sheet of a colored glass and a second sheet of a clear glass which are joined together by means of a lamination interlayer, said first sheet having a thickness e1 ranging from 1.5 to 2.5 mm, said second sheet having a thickness e2 ranging from 0.4 to 1.9 mm, the ratio R = e2/e1² being at most 0.40 mm⁻¹, said glazing having a light transmission of at least 70% and a direct solar transmission of at most 55%, said colored glass having a chemical composition comprising a weight content of total iron, expressed in the form Fe₂O₃, ranging from 1.1 to 2.0%, with a redox ratio, defined as the ratio between the weight content of ferrous iron, expressed in the form FeO, and the weight content of total iron, expressed in the form Fe₂O₃, ranging from 0.23 to 0.32.

2. The laminated glazing as claimed in claim 1, such that the thickness e2 is within a range of from 0.5 to 1.7 mm.

3. The laminated glazing as claimed in either of the preceding claims, such that the ratio R is at most 0.35, in particular 0.30 mm⁻¹.

4. The laminated glazing as claimed in one of the preceding claims, wherein the first sheet consists of a soda-lime-silica glass.

5. The laminated glazing as claimed in one of the preceding claims, wherein the first glass sheet is made of glass that is not mechanically reinforced.

6. The laminated glazing as claimed in one of the preceding claims, wherein the second glass sheet is chemically toughened.

7. The laminated glazing as claimed in one of the preceding claims, wherein the second glass sheet consists of a soda-lime-silica glass, the thickness e2 being at least 0.6 mm.

8. The glazing as claimed in one of claims 1 to 6, wherein the second glass sheet consists of a chemically toughened aluminosilicate glass, the thickness e2 being at most 0.7 mm.

9. The laminated glazing as claimed in one of the preceding claims, wherein the colored glass has a chemical composition comprising a weight content of total iron, expressed in the form Fe₂O₃, ranging from 1.3 to 1.8%.

10. The laminated glazing as claimed in one of the preceding claims, wherein the colored glass has a chemical composition such that the redox ratio is within a range of from 0.24 to 0.29.

11. The laminated glazing as claimed in one of the preceding claims, the direct solar transmission of which is at most 50%.

12. The laminated glazing as claimed in one of the preceding claims, the thickness of which is at most 5 mm, in particular 4.5 mm, or even 4 mm.

13. The laminated glazing as claimed in one of the preceding claims, wherein the lamination interlayer comprises at least one sheet of polyvinyl acetal, in particular of polyvinyl butyral.

14. A glazing for a transport vehicle, in particular a motor vehicle, in particular windshield or side window, comprising a laminated glazing as claimed in one of the preceding claims.

15. The glazing as claimed in the preceding claim, wherein the second glass sheet is the inner sheet, intended to be positioned on the inside of the passenger compartment of the vehicle.
